# EUROPEAN PATENT SPECIFICATION

(11) **EP 1 855 484 B1**
(45) Date of publication and mention of the grant of the patent: **11.06.2014**
(21) Application number: 07251866.5
(22) Date of filing: 03.05.2007
(51) Int. Cl.: H04N 19/162, H04N 19/46, H04N 19/463, H04N 19/61, H04N 19/85

(54) **Creation and compression of video**
Erzeugung und Kompression von Videos
Création et compression de vidéo

(30) Priority: 08.05.2006 GB 0609050
(43) Date of publication of application: 14.11.2007
(73) Proprietor: Amberfin Limited, Basingstoke, Hampshire RG21 4HG (GB)
(72) Inventor: Knee, Michael James, Petersfield Hampshire GU32 2EE (GB)
(74) Representative: Garratt, Peter Douglas

(56) References cited:
- EP-A- 0 989 563
- EP-A- 1 202 574
- US-A1- 2001 003 534
- US-A1- 2004 258 148
- US-A1- 2006 087 586
- US-A1- 2006 294 125
- US-B1- 6 223 278
- US-B1- 6 934 333

## Description

### FIELD OF INVENTION

This invention concerns the creation and compression of video data and is particularly relevant to MPEG and similar methods of video compression.

### BACKGROUND OF THE INVENTION

A typical video compression encoder (for example an MPEG-2 encoder according to the ISO/IEC 13818-2 standard) makes an analysis of its input video in order to make decisions on how the video will be coded. These decisions include whether a particular frame will be described as the difference from a prediction, and if so, which other frames will be used to form the prediction, and how the transmitted data will be quantised. Motion compensated predictions require the encoder to analyse motion and create motion vectors. The quality of the decoded video (i.e. the transparency of the coding process) is dependent on the quality of the coding decisions and motion measurement.

European Patent EP 0 913 058 describes how coding decisions and related information can be retained in a compression decoder and carried with the decoded video for use in a subsequent compression process, and European Patent EP 1 051 851 describes how video that has not been previously encoded can be analysed and the results carried with the video for use in a compression encoder. US Patent Application US 2004/0258148 describes a process for coding a scene composed of objects defined by images or parts of images from various video sources. Auxiliary data relating to the composition and the texture of the objects is calculated and coded.

### SUMMARY OF THE INVENTION

The inventor has appreciated that there are some situations in which coding parameters can be created as part of the video origination process enabling higher quality compression to be achieved without the need for high-quality video analysis in the compression encoder. In particular, much video content is created without the use of cameras. For example: captions and subtitles are synthesised from text and formatting data; channel identification logos and clocks are synthesised from stored data; and, animated or stationary graphics may be created on a computer workstation.

The invention is defined in the appended claims.

### BRIEF DESCRIPTION OF THE DRAWINGS

The invention will now be described by way of examples with reference to the drawings in which:
Figure 1 shows compression of the output of a video origination device according to a first exemplary embodiment;
Figure 2 shows compression of the output of a Logo/Caption Generator and inserter according to a second exemplary embodiment; and
Figure 3 shows compression of the output of a video mix/effects processor fed from a video origination device according to a third exemplary embodiment.

### DETAILED DESCRIPTION OF THE INVENTION

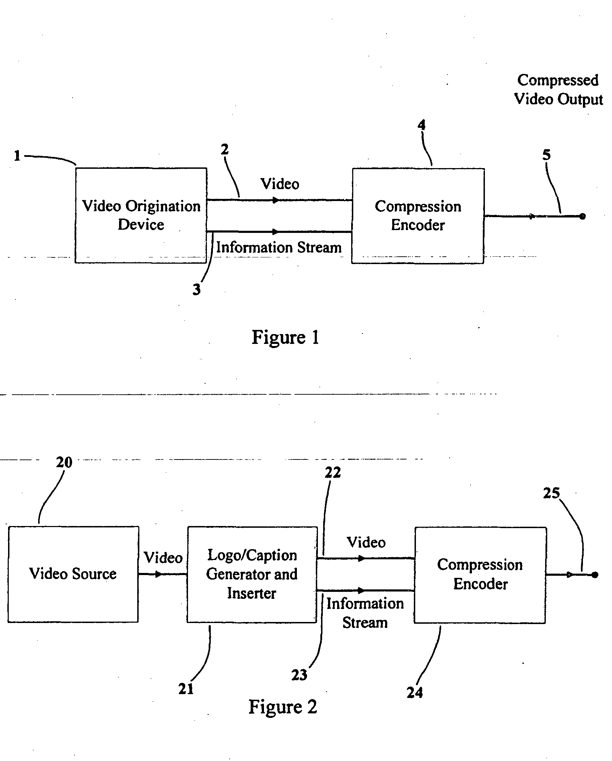

A first exemplary embodiment of the invention is shown in Figure 1. A video origination device (1) produces a video signal (2) and an information stream (3). The device (1) may be a caption or logo generator or a graphics work station, and its video output may be moving or stationary. The video signal (2) may be a serial digital component data stream or any other uncompressed video format.

The information stream (3) comprises information to assist the compression of the video (2). This could include at least any of the following elements:
- Prediction methods to be applied to spatial or temporal segments of the video.
- Quantisation parameters to be applied to data derived from spatial or temporal segments of the video.
- Motion vectors applicable to all or part of the video. These vectors may be absolute, i.e. describing motion speed and direction, or relative, i.e. describing motion between two defined frames.
- Whether the video is interlaced or progressively scanned.
- Information about the temporal sampling of the video such as "field dominance" or 3:2 pulldown sequence information.

This information is generated from the same data as is used to create the caption or logo; and, the origination device (1) will usually have prior knowledge of such data. For example, if a scrolling caption is generated, the speed and direction of motion requested by an operator can be used to create motion vectors for the pixels of the caption. This information will be more accurate and easier to obtain than equivalent information derived by analysis of the video (2). Similarly, decisions about prediction modes and quantisation can be derived from accurate and unambiguous knowledge of the caption or logo.

The stream (3) may also include information relating to compression which is not related to the nature of the video content; for example, a desired MPEG group-of pictures (GoP) sequence.

The information stream (3) could take the form of the "re-encoding data set" defined in SMPTE standard 327M. It could be carried in the same signal as the video (2), perhaps replacing the least-significant chrominance bit; alternatively, it could be a separate signal associated with the video (2). It will be apparent that the association or coding must enable the information in the stream to be related to the appropriate spatial and temporal elements of the video, for example: frames, coding-blocks or pixels.

A compression encoder (4) compresses the video (2) to give a compressed output (5). This output may be streaming data, for example an MPEG data stream; or, a file in an associated storage device.

If the encoder (4) takes all its coding decisions, motion vectors and video format information from the information stream (3), the encoder can be of simple design (i.e. it can be a "dumb" encoder). It is also possible for only some parameters to be taken from the information stream, perhaps only motion vectors. The information stream may not contain all the parameters necessary to define the video coding and some parameters may be taken from the stream while others are determined in the encoder. Another possibility is that the information (3) may require some processing before it can be used by the encoder (4); for example, it may be necessary to convert absolute motion vectors into motion vectors between defined frames. The optimum arrangement will depend on system considerations, in particular whether it is practicable for all the relevant information to be available to the generator (1).

A second exemplary embodiment of the invention is shown in Figure 2.

It is often the case that the output of a caption or logo generator is not required to occupy the whole image area. It is very common for captions or logos to be "keyed into" a video signal so that an area of the picture defined by the caption or logo generator is replaced by its output. The shape and size of the area which is replaced may vary in dependence upon movement of the inserted caption or logo.

In Figure 2, a video source (20), which may, for example, be a video camera, feeds a caption or logo generator and inserter (21). The caption or logo generator or inserter (21) inserts a caption or logo into the video received from the video source (20). As well as the combined caption and video (22), the generator and inserter (21) outputs an information stream (23) which contains information to assist the compression coding of the caption or logo elements of the combined video (22). The stream (23) refers only to the caption or logo because the generator and inserter (21) has no information about the other parts of the picture and does not analyse its video input.

A compression encoder (24) compresses the video (22) to create a compressed video stream or file output (25). This encoder must analyse those parts of the video (22) which do not contain material generated and inserted by the block (21), but can use the information stream (23) to determine how the caption or logo should be coded.

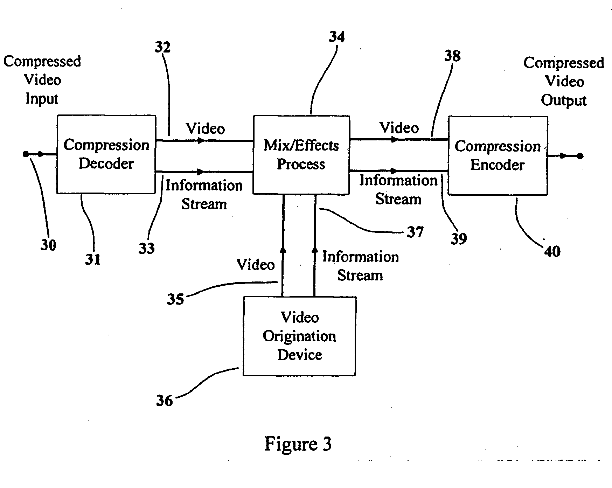

A third exemplary embodiment is shown in Figure 3.

A compressed video input (30) is decompressed in a decoder (31) which provides both decoded video (32) and an information stream (33), containing information about the parameters used in the compression of the video (30). A mix/effects process (34) combines the video (32) with a second video signal (35) from a video origination device (36). This combination may be any of the well-known video combination techniques such as: inlay, wipes, other keying techniques, mixing, non-additive mixing etc. If keying is involved, the video (35) may include a key signal, or a key signal may be associated with it and input to the mix/effects process (34).

The origination device (36) provides an information stream (37) containing parameters to assist the coding of the video (35). These are obtained directly from the video origination process, and are not obtained by analysing the video (35).

The mix/effects process (34) provides a combined video output (38) and an information stream (39). This information stream (39) contains parameters to assist compression of the video (38) in a compression encoder (40). The information stream (39) may contain all the information from the information streams (33) and (37) or may only contain those parts of these information streams which relate to the video (38). In any event it will be necessary for the elements of the information stream (39) to be associated with relevant spatial and temporal segments of the video (38). This is achieved automatically if the information stream (39) is encoded into the video (38) (for example in a low-significance bit). Another option would be to combine the streams (33) and (37) with a key signal and output the combined streams and the key as the stream (39).

The compression encoder (40) compresses the video (38), making use of the information stream (39) to avoid or reduce the need for analysis of the video (38); and, to avoid cumulative compression impairments by ensuring that the previously compressed parts of the video (38) (i.e. the parts of the video (32) contributing to the video (38)) are compressed in the same way that they were compressed in the compressed video (30).

In all of the above-described embodiments of the invention there is more than one source of coding parameters for the compression encoder:
- Video analysis by, and control input to, the compression encoder itself;
- Information embedded in, or associated with, the encoder's video input; and,
- In the case of the system shown in Figure 3 there may be two separate sets of information embedded in, or associated with, the video input.

It will be preferable for the system to prioritise these sources of information to achieve the optimum coded video output; usually by giving "primacy" to one of these sources of coding parameters. Alternatively, the compression encoder may evaluate all sources of coding parameters available to it and decide the most appropriate on the basis of a quality measure relating to the coded output.

In the foregoing description, reference has been made to various functional blocks or entities. It will be recognised that the function of each block may be performed by dedicated hardware, by hardware containing some dedicated and some programmable elements or by software capable of running on video or general data processing apparatus. In particular but not exhaustive examples, the present invention may be implemented in software running on a microprocessor or other programmable element provided within a logo or caption generator; as code forming part of logo or caption generation software; as software within a digital special effects generator or as software within a computer generated film or video environment.

## Claims

1. Video origination apparatus comprising: means for receiving a text input; means for receiving a scrolling rate associated with said text; means for synthesising a video output at least in part from said text and from said scrolling rate; means for deriving from said scrolling rate at least one compression coding parameter in the form of a motion vector for use in compression coding of the video output, and means for outputting the compression coding parameter in or in association with the output video.

2. A method of video processing comprising the steps of receiving a video input; receiving a text input; receiving a scrolling rate associated with said text; synthesising a video output from said video input, from said text and from said scrolling rate; deriving from said scrolling rate at least one compression coding parameter in the form of a motion vector for use in compression coding of the video output; and outputting the compression coding parameter in or in association with the output video.

3. A computer program product adapted to implement a method according to Claim 2.

## Patentansprüche

1. Video-Erzeugungsvorrichtung, die Folgendes umfasst:
Mittel zum Empfangen einer Texteingabe; Mittel zum Empfangen einer Bildlaufgeschwindigkeit, die dem Text zugeordnet ist; Mittel zum Synthetisieren einer Videoausgabe mindestens teilweise ausgehend von dem Text und von der Bildlaufgeschwindigkeit; Mittel zum Ableiten von der Bildlaufgeschwindigkeit mindestens eines Kompressionscodierungsparameters in Form eines Bewegungsvektors zur Verwendung bei der Kompressionscodierung der Videoausgabe, und Mittel zum Ausgeben des Kompressionscodierungsparameters in oder in Verbindung mit der Videoausgabe.

2. Verfahren zur Videoverarbeitung, das folgende Schritte umfasst: Empfangen einer Videoeingabe; Empfangen einer Texteingabe; Empfangen einer Bildlaufgeschwindigkeit, die dem Text zugeordnet ist; Synthetisieren einer Videoausgabe ausgehend von der Videoeingabe, von dem Text und von der Bildlaufgeschwindigkeit; Ableiten von der Bildlaufgeschwindigkeit mindestens eines Kompressionscodierungsparameters in Form eines Bewegungsvektors zur Verwendung bei der Kompressionscodierung der Videoausgabe, und Ausgeben des Kompressionscodierungsparameters in oder in Verbindung mit der Videoausgabe.

3. Computerprogrammprodukt, das dafür ausgelegt ist, ein Verfahren nach Anspruch 2 zu implementieren.

## Revendications

1. Appareil de création de vidéo comportant : un moyen permettant de recevoir une entrée de texte ; un moyen permettant de recevoir une vitesse de défilement associée audit texte ; un moyen permettant de synthétiser une sortie vidéo au moins en partie à partir dudit texte et à partir de ladite vitesse de défilement ; un moyen permettant de dériver à partir de ladite vitesse de défilement au moins un paramètre de codage de compression sous la forme d'un vecteur mouvement à des fins d'utilisation dans le codage de compression de la sortie vidéo, et un moyen permettant de sortir le paramètre de codage de compression dans ou en association avec la vidéo de sortie.

2. Procédé de traitement de vidéo comportant les étapes consistant à recevoir une entrée vidéo ; recevoir une entrée de texte ; recevoir une vitesse de défilement associée audit texte ; synthétiser une sortie vidéo à partir de la dite entrée vidéo, à partir dudit texte et à partir de ladite vitesse de défilement ; dériver à partir de ladite vitesse de défilement au moins un paramètre de codage de compression sous la forme d'un vecteur mouvement à des fins d'utilisation dans le codage de compression de la sortie vidéo ; et sortir le paramètre de codage de compression dans ou en association avec la vidéo de sortie.

3. Produit programme informatique adapté à des fins de mise en oeuvre d'un procédé selon la revendication 2.
